# EUROPEAN PATENT APPLICATION

(11) **EP 4 579 935 A1**
(43) Date of publication of application: **02.07.2025**
(21) Application number: 24200280.6
(22) Date of filing: 13.09.2024
(51) Int. Cl.: H01M 50/559, H01M 50/562, H01M 50/564, H01M 50/567, H01M 50/188, H01M 50/545

(54) **RECHARGEABLE BATTERY**

(30) Priority: 26.12.2023 KR 20230191916
(71) Applicant: SAMSUNG SDI CO., LTD., Yongin-si, Gyeonggi-do 17084 (KR)
(72) Inventor: JUNG, Hyunki, 17084 Yongin-si (KR); PARK, Gungue, 17084 Yongin-si (KR); KO, Sunggwi, 17084 Yongin-si (KR); JEONG, Euikwang, 17084 Yongin-si (KR); KIM, Munsung, 17084 Yongin-si (KR)
(74) Representative: Marks & Clerk LLP

(57) **Abstract**

A rechargeable battery includes an electrode assembly, a can accommodating the electrode assembly inside and including a terminal hole, a rivet terminal including a pillar part extending into the terminal hole and a head part coupled to the pillar part, and an insulator between the rivet terminal and the can. The insulator includes a middle part that surrounds the pillar part and extends into the terminal hole, an outer part contacting the head part and the outer surface of the can, and an inner part contacting the inner surface of the can. At least two of the middle part, the outer part, and the inner part include different insulating materials with different heat resistance temperatures.

## Description

### BACKGROUND

### 1. Field

The present disclosure relates to a rechargeable battery.

### 2. Description of the Related Art

A large capacity battery module system may include a plurality of cylindrical rechargeable batteries and a plurality of bus bars that electrically connect the plurality of cylindrical rechargeable batteries. The cylindrical rechargeable battery may include a can with a negative polarity and a rivet terminal with a positive polarity installed in the opening provided in the can. An insulator is between the rivet terminal and the can to insulate the rivet terminal and the can and simultaneously seal the area around the rivet terminal.

During use of the battery module system, heat may be generated in the rechargeable battery due to various reasons such as an external impact, a high temperature environment, and rapid charge and discharge, and the insulator may lose its insulation function thereof due to the heat. The rechargeable battery that has lost its insulation function may be discharged due to the short circuit, and neighboring rechargeable batteries connected by the bus bar may be also discharged and generate heat.

The above-described information disclosed in the background of the present disclosure is only for improving understanding of the background of the present disclosure and thus may include information that does not constitute the related art.

### SUMMARY

The present disclosure relates to embodiments of a rechargeable battery that are configured to ensure the safety of the rechargeable battery and the battery module system by ensuring that the insulator maintains its insulation performance even when the rechargeable battery generates heat.

A rechargeable battery according to an embodiment includes, comprises or is equipped with, an electrode assembly, a can, a rivet terminal, and an insulator. It may be a cylindrical rechargeable battery. The electrode assembly includes a first electrode, a separator, and a second electrode. The can accommodates the electrode assembly, and a terminal hole is in the can. The rivet terminal includes a pillar part that extends into the terminal hole and a head part coupled to the pillar part. The insulator is between the rivet terminal and the can. The insulator may include a middle part that surrounds the pillar part and extends into the terminal hole, an outer part contacting the head part and an outer surface of the can, and an inner part contacting an inner surface of the can. At least two of the middle part, the outer part, and the inner part may include different insulating materials with different heat resistance temperatures.

The outer part and the inner part may include insulating materials having heat resistance temperature different from heat resistance temperature of the middle part. The middle part may include thermoplastic polymer materials, and the outer part and the inner part may include any one of crosslinked polymer materials, thermosetting polymer materials, polymer materials containing non-conductors, anodized aluminum, and ceramics. The middle part may include any one of crosslinked polymer materials, thermosetting polymer materials, polymer materials containing non-conductors, anodized aluminum, and ceramics, and the outer part and the inner part may include thermoplastic polymer materials.

One of the outer part and the inner part may include the same insulating material as the middle part, and the other may include an insulating material different from the middle part. The middle part and the inner part may include thermoplastic polymer materials, and the outer part may include any one of crosslinked polymer materials, thermosetting polymer materials, polymer materials containing non-conductors, anodized aluminum, and ceramics. The middle part and the inner part may include any one of crosslinked polymer materials, thermosetting polymer materials, polymer materials containing non-conductors, anodized aluminum, and ceramics, and the outer part may include thermoplastic polymer materials.

The middle part and the outer part may include thermoplastic polymer materials, and the inner part may include any one of crosslinked polymer materials, thermosetting polymer materials, polymer materials containing non-conductors, anodized aluminum, and ceramics. The middle part and the outer part may include any one of crosslinked polymer materials, thermosetting polymer materials, polymer materials containing non-conductors, anodized aluminum, and ceramics, and the inner part may include thermoplastic polymer materials.

The middle part, the outer part, and the inner part may include different insulating materials. The middle part may include thermoplastic polymer materials, one of the outer part or the inner part may include any one of crosslinked polymer materials, thermosetting polymer materials, and polymer materials containing non-conductors, and the other of the outer part or the inner part may include any one of anodized aluminum and ceramics.

The outer part may include thermoplastic polymer materials, one of the middle part or the inner part may include any one of crosslinked polymer materials, thermosetting polymer materials, and polymer materials containing non-conductors, and the other of the middle part or the inner part may include any one of anodized aluminum and ceramics.

The inner part may include thermoplastic polymer materials, one of the middle part or the outer part may include any one of crosslinked polymer materials, thermosetting polymer materials, and polymer materials containing non-conductors, and the other of the middle part or the outer part may include any one of anodized aluminum and ceramics.

A rechargeable battery according to another embodiment includes an electrode assembly, a can, a rivet terminal, and an insulator. The electrode assembly includes a first electrode, a separator, and a second electrode. The can accommodates the electrode assembly inside, and a terminal hole is in the can. The rivet terminal includes a pillar part extending into the terminal hole and a head part coupled to the pillar part. The insulator is between the rivet terminal and the can. The insulator includes a middle part surrounding the pillar part and extending into the terminal hole, an outer part contacting the head part and an outer surface of the can, and an inner part contacting an inner surface of the can. The middle part, the outer part, and the inner part include different insulating materials with different heat resistance temperatures, the inner part has a higher heat resistance temperature than the middle part and the middle part has a higher heat resistance temperature than the outer part.

The outer part may include thermoplastic polymer materials, and at least one of the middle part or the inner part may include any one of crosslinked polymer materials, thermosetting polymer materials, polymer materials containing non-conductors, anodized aluminum, and ceramics.

A rechargeable battery according to another embodiment includes an electrode assembly, a can, a rivet terminal, and an insulator. The electrode assembly includes a first electrode, a separator, and a second electrode. The can accommodates the electrode assembly inside, and a terminal hole is in the can. The rivet terminal includes a pillar part extending into the terminal hole and a head part coupled to the pillar part. The insulator is between the rivet terminal and the can. The insulator includes a middle part surrounding the pillar part and extending into the terminal hole, an outer part contacting the head part and an outer surface of the can, and an inner part contacting an inner surface of the can. The middle part, the outer part, and the inner part include different insulating materials with different heat resistance temperatures, the outer part has a higher heat resistance temperature than the middle part and the middle part has a higher heat resistance temperature than the inner part.

The inner part may include thermoplastic polymer materials, and at least one of the middle part and the outer part may include any one of crosslinked polymer materials, thermosetting polymer materials, polymer materials containing non-conductors, anodized aluminum, and ceramics.

In embodiments, the insulator has high resistance to heat and pressure, so a thermal deformation may be minimized (or at least reduced) in various high temperature and high-pressure environments. Therefore, the rechargeable battery may increase the safety of the battery module system by maintaining the insulating performance of the insulator in various high temperature and high pressure environments.

At least some of the above and other features of the invention are set out in the claims.

### BRIEF DESCRIPTION OF THE DRAWINGS

FIG. 1 is a perspective view of a rechargeable battery according to a first embodiment.
FIG. 2 is a cross-sectional view of a rechargeable battery shown in FIG. 1.
FIG. 3 is an enlarged cross-sectional view of a portion of an electrode assembly of a rechargeable battery shown in FIG. 2.
FIG. 4 is an enlarged view of a portion of FIG. 2.
FIG. 5 is an enlarged cross-sectional view of a portion of a rechargeable battery showing a variation of a rivet terminal shown in FIG. 4.
FIG. 6 and FIG. 7 are enlarged cross-sectional views of a portion of a rechargeable battery according to further embodiments.
FIG. 8 is an enlarged cross-sectional view of a portion of a rechargeable battery according to a further embodiment.

### DETAILED DESCRIPTION

The present disclosure will be described more fully hereinafter with reference to the accompanying drawings, in which embodiments of the disclosure are shown. As those skilled in the art would realize, the described embodiments may be modified in various different ways, all without departing from the scope of the present disclosure.

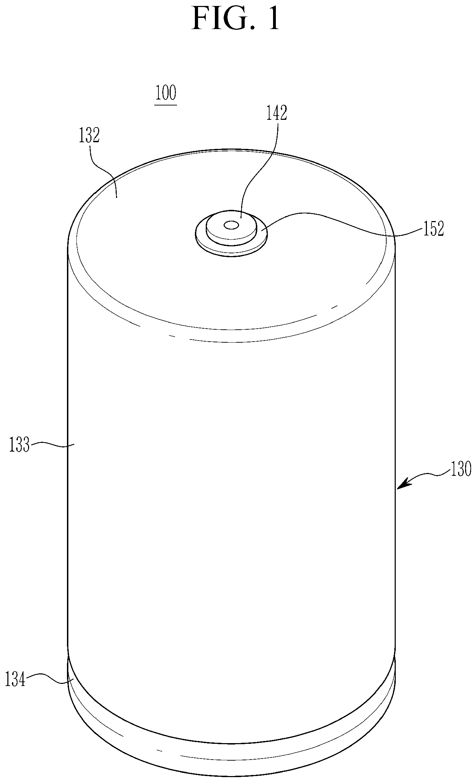

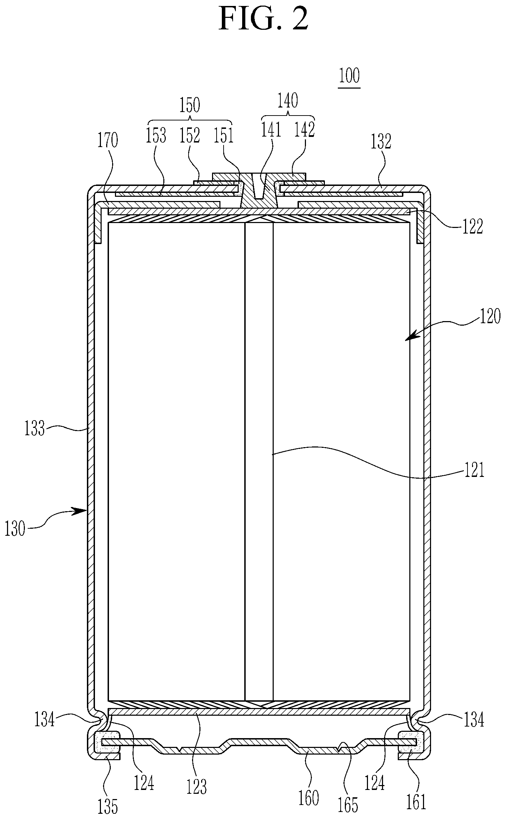

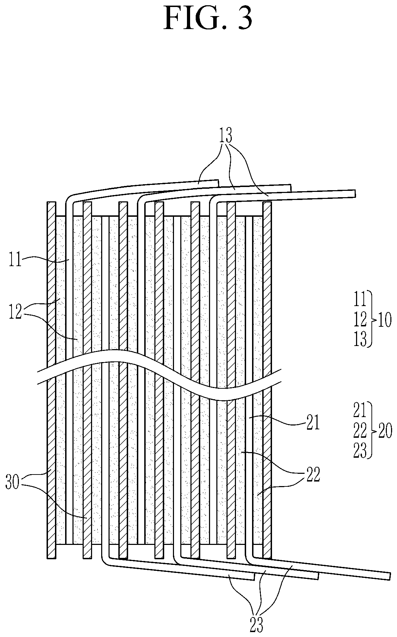

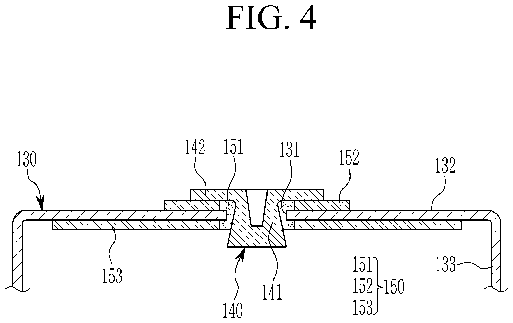

FIG. 1 is a perspective view of a rechargeable battery according to a first embodiment. FIG. 2 is a cross-sectional view of a rechargeable battery shown in FIG. 1. FIG. 3 is an enlarged cross-sectional view of a portion of the electrode assembly of the rechargeable battery shown in FIG. 2. FIG. 4 is an enlarged partial view of FIG. 2.

Referring to FIG. 1 to FIG. 4, a rechargeable battery 100 may include an electrode assembly 120, a can 130 that accommodates the electrode assembly 120 inside an interior space of the can 130, a rivet terminal 140 in a terminal hole 131 of the can 130, and an insulator 150 between the can 130 and the rivet terminal 140. The rechargeable battery 100 may also include a cap plate 160 that is coupled to the end of the can 130 and seals the can 130.

The electrode assembly 120 may include a first electrode 10, a second electrode 20, and a separator 30. The electrode assembly 120 is accommodated inside the can 130 together with an electrolyte. The separator 30 may be between the first electrode 10 and the second electrode 20 and insulates them. Each of the first electrode 10, the second electrode 20, and the separator 30 may be configured in a shape of a long strip, and may be wound together around the center pin 121.

The first electrode 10 includes a first substrate 11 and a first composite material layer 12 on the first substrate 11. The second electrode 20 includes a second substrate 21 and a second composite material layer 22 on the second substrate 21. The first composite material layer 12 may be on the remaining portion of the first substrate 11 except for one (e.g., upper) edge. The second composite material layer 22 may be on the remaining portion of the second substrate 21 except for the other (e.g., lower) edge.

For the first substrate 11, the portion where the surface is exposed and not covered by the first composite material layer 12 may be referred to as a first uncoated region 13. For the second substrate 21, the portion where the surface is exposed and not covered by the second composite material layer 22 may be referred to as a second uncoated region 23.

In a lithium-ion rechargeable battery, the first substrate 11 may include an aluminum foil, and the first composite material layer 12 may include transition metal oxides such as LiCoO₂, LiNiO₂, LiMn₂O₄, Li(NiCoAl)O₂, LiFePO₄, and Li(NiCoMn)O₂, etc, and conductive materials, and binders, etc. The second substrate 21 may include a copper foil or a nickel foil, and the second composite material layer 22 may include carbon materials such as graphite, conductive materials, and binders, etc. The first electrode 10 may be referred to as a positive electrode, and the second electrode 20 may be referred to as a negative electrode.

The separator 30 may include a porous substrate, or may include a porous substrate with a coating layer on at least one side. The porous substrate may include one or more of polyethylene, polypropylene, polyethylene terephthalate, polypropylene terephthalate, polybutylene terephthalate, polyester, polycarbonate, or polyimide. The coating layer may include a binder and may further include inorganic particles. The binder may include a polyvinylidene fluoride-based compound. The inorganic particles may include one or more of Al₂O₃, BaSO₄, MgO, Mg(OH)₂, SiO₂, TiO₂, ZnO, SnO₂, NiO, or GaO. The separator 30 insulates the first electrode 10 and the second electrode 20 and allows movement of lithium ions.

The first uncoated region 13 may be bent toward the center pin 121 and may overlap with (one or more of) the first uncoated region(s) 13 positioned inside it. A first current collecting plate 122 may be coupled (fixed) to the first uncoated region(s) 13 by a method such as welding. The second uncoated region 23 may also be bent toward the center pin 121 and may overlap with (one or more of) the second uncoated region(s) 23 positioned inside it. A second current collecting plate 123 may be coupled (fixed) to the second uncoated region(s) 23 by a method such as welding.

The can 130 has a shape with one opened side (e.g., an open lower side) so that the electrode assembly 120 and the first and second current collecting plates 122 and 123 may be inserted therethrough. The can 130 may include a top portion 132 and a side portion 133 connected to the edge of the top portion 132. The top portion 132 may be referred to as a bottom portion when the top and bottom of the rechargeable battery 100 are reversed (e.g., the rechargeable battery is turned upside down). In one or more embodiments, the can 130 may be made of steel, stainless steel, aluminum, or an aluminum alloy.

The terminal hole 131 (see FIG. 4) may be in the center (or substantially the center) of the top portion 132, and the rivet terminal 140 may be in the terminal hole 131 via the insulator, i.e. the insulator 150 may be in the terminal hole 131 between the rivet terminal 140 and the can 130. The rivet terminal 140 may be combined with or joined to the first current collecting plate 122, and may have, or may be charged to, the same polarity as the first electrode 10 by the first current collecting plate 122 and function as a first terminal (e.g., a positive electrode terminal).

The insulator 150 surrounds the rivet terminal 140 and is in the terminal hole 131. The insulator 150 insulates the rivet terminal 140 and the top portion 132 and seals the terminal hole 131 to prevent leakage of the electrolyte solution.

An insulating cover 170 may be on one side of the first current collecting plate 122 facing the top portion 132.

The cap plate 160 may be on the outside (e.g., the lower side) of the second current collecting plate 123 and may be coupled to the end of the side portion 133 via the insulating gasket 161. A notch groove 165 may be on the inner surface of the cap plate 160. The notch groove 165 may have a V-shaped cross-section and may have a circular arc shape on a plane in a top view.

The internal temperature of the rechargeable battery may rise due to various causes such as a rapid charge and discharge, an external impact, and/or exposure to a high temperature environment, and the internal pressure may rise due to gasification of the electrolyte solution, etc. When the internal pressure of the rechargeable battery 100 increases, the cap plate 160 is broken around the notch groove 165 and the internal gas may be discharged.

A beading portion 134 and a crimping portion 135 may be in the side portion 133. The beading portion 134 may be a portion in which the portion of the side portion 133 is concavely deformed toward the inside of the side portion 133 (i.e., the beading portion 134 is deformed inward toward the center pin 121). The crimping portion 135 may be a portion in which the end of the side portion 133 is vertically bent toward the inside of the side portion 133 (i.e., the crimping portion 135 is deformed inward toward the center pin 121).

Motion of the electrode assembly 120 may be suppressed inside the can 130 by the beading portion 134, and the edges of the insulating gasket 161 and the cap plate 160 may be compressed between the beading portion 134 and the crimping portion 135. The cap plate 160 may be firmly fixed to the side portion 133 of the can 130 by the beading portion 134 and the crimping portion 135, and the cap plate 160 may be electrically non-polar by being insulated from the first electrode 10 and the second electrode 20.

In one or more embodiments, the second current collecting plate 123 may include a conductive portion 124 in close contact with the inner surface of the side portion 133. The conductive portion 124 may include two or more pieces or parts along the edge of the second current collecting plate 123. The can 130 may have, or may be charged to, the same polarity as the second electrode 20 by the second current collecting plate 123 and may function as a second terminal (e.g., a negative terminal).

A plurality of the rechargeable batteries 100 may be arranged in a configuration and may be connected together by a bus bar to form a battery module system.

The rivet terminal 140 may include a pillar part 141 that extends through the terminal hole 131, and a head part connected to the pillar part 141 and on the outer side (e.g., the upper side) of the top portion 132. The pillar part 141 and the head part 142 may be manufactured as one body, i.e. monolithically or integrally. The pillar part 141 may extend from the outside of the top portion 132 and into the terminal hole 131.

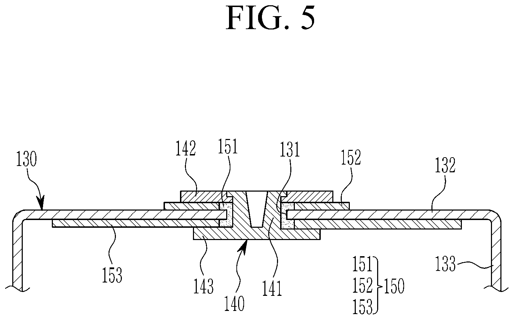

FIG. 5 is an enlarged cross-sectional view of a portion of a rechargeable battery showing a variation of a rivet terminal shown in FIG. 4. Referring to FIG. 5, the pillar part 141 may further include a flange 143 on the inner side (e.g., the lower side) of the top portion 132. In one or more embodiments, the pillar part 141 and the head part 142 may be manufactured separately and then combined or coupled together. The head part 141 may enter from the inside to the outside of the top portion 132 and be inserted into the terminal hole 131, and the head part 142 may be coupled to the pillar part 141 on the outside of the top portion 132.

Referring to FIG. 1 to FIG. 5, because the rivet terminal 140 and the can 130 have opposite polarity, they are insulated from each other by the insulator 150. The insulator 150 may include a middle part 151, an outer part 152, and an inner part 153.

The middle part 151 of the insulator 150 may be in contact with the pillar part 141 and may be in the terminal hole 131. The outer part 152 may be between the outer surfaces of the head part 142 and the top portion 132, and may be in close contact with the outer surfaces of the head part 142 and the top portion 132. The inner part 153 may be in close contact with the inner surface of the top portion 132. The middle part 151 may be in contact with the outer part 152 and the inner part 153 and may connect them in one integral or monolithic body.

The outer part 152 and the inner part 153 may be shaped like a disk with a hole in the center. The diameter of the inner part 153 may be larger than the diameter of the outer part 152 and may be slightly smaller than the diameter of the top portion 132 of the can 130. The inner part 153 may function to prevent the first current collecting plate 122 from being in contact with the can 130. The thickness of the outer part 152 and the inner part 153 may be the same or different.

At least two of the middle part 151, the outer part 152, and the inner part 153 may include different materials. The different materials refer to insulating materials of which the constituent materials and heat resistance temperatures are different from each other. In one or more embodiments of the rechargeable battery 100, the outer part 152 and the inner part 153 of the insulator 150 may include different insulating materials from the middle part 151.

In one or more embodiments, the outer part 152 and the inner part 153 of the insulator 150 may include insulating materials with a higher heat resistance temperature than the middle part 151. That is, the middle part 151 may include one or more first insulating materials, and the outer part 152 and the inner part 153 may include one or more second insulating materials having a higher heat resistance temperature than the first insulating materials.

In one or more embodiments, the middle part 151 of the insulator 150 may include insulating materials with a higher heat resistance temperature than the outer part 152 and the inner part 153. That is, the outer part 152 and the inner part 153 may include one or more first insulating materials, and the middle part 151 may include one or more second insulating materials having a higher heat resistance temperature than the first insulating materials.

The first insulating materials may include thermoplastic polymer materials, such as at least one of polyethylene (PE), polypropylene (PP), polybutylene terephthalate (PBT), and/or polyfluoroalkyl (PFA). The heat resistance temperature of the first insulating materials may be in a range from approximately 100°C to 300°C. The second insulating materials may include any of crosslinked polymer materials, thermoset polymer materials, and/or polymer materials containing non-conductors. The heat resistance temperature of the second insulating materials may be in a range from approximately 200°C to 500°C.

The crosslinked polymer materials may include crosslinked polyethylene (PE) or crosslinked polypropylene (PP). Crosslinking of polymer materials is a chemical reaction that connects chain-shaped polymers through chemical bonds, and improves the properties of polymer polymers. As the degree of the cross-linking (a number of cross-links) increases, the thermoplasticity of the polymer materials decreases, and the mechanical strength and the heat resistance characteristics increase. In one or more embodiments, the crosslinked polymer materials may be produced through an injection process and a water crosslinking process of the polymer materials.

The thermosetting polymer materials have the property of not changing shape when heat is applied again. The thermosetting polymer materials have superior heat resistance performance, mechanical strength, and electrical insulation than the thermoplastic polymer materials, and stronger moldings may be made by adding a filler. The thermosetting polymer materials may include at least one of phenol resin, epoxy resin, unsaturated polyester resin, silicon resin, or polyurethane resin.

The polymer materials containing non-conductors may include a plurality of non-conductor particles and thermosetting polymer materials. The plurality of non-conductor particles may include at least one of a plurality of ceramic balls, a plurality of anodized aluminum balls, or a plurality of glass fibers. The polymer materials containing non-conductors have better heat resistance performance, mechanical strength, and electrical insulation than the thermosetting polymer materials that do not contain non-conductors.

In one or more embodiments, the second insulating materials may be replaced by third insulating materials. The third insulating materials may include one of anodized aluminum or ceramics. Anodized aluminum is aluminum in which an oxide film is formed on the surface by anodizing, and has high durability and corrosion resistance. The ceramics may include oxide ceramics, nitride ceramics, carbide ceramics, or other ceramics, and may include, for example, alumina. The third insulating materials have a higher heat resistance performance and mechanical strength than the second insulating materials.

In one or more embodiments, the insulator 150 may be manufactured in three pieces corresponding to the middle part 151, the outer part 152, and the inner part 153, respectively, and these three pieces may be integrally combined during the assembly process of the rechargeable battery 100. In one or more embodiments, the middle part 151 may be manufactured integrally with the outer part 152 or the inner part 153. That is, the insulator 150 may be manufactured by being divided into a first piece including the middle part 151 and one of the outer part 152 and the inner part 153 and a second piece (the other of the outer part 152 and the inner part 153), and these two pieces may be integrally combined during the assembly process of the rechargeable battery 100.

During the use of the battery module system, heat generation and an increased internal pressure may occur in certain rechargeable batteries due to various causes such as an external impact, an exposure to high temperature environments, and/or rapid charge and discharge. The heat generation and the increased internal pressure may lead to thermal deformation of the insulator 150 and a loss or reduction of an insulating function, and the rechargeable battery that has lost the insulating function may be discharged by a short circuit. Accordingly, neighboring rechargeable batteries connected thereto by a bus bar may also be discharged, causing heat generation and an increase in internal pressure.

If the outer part 152 and the inner part 153 include the second insulating materials or the third insulating materials, the outer part 152 may withstand the high heat and the pressure applied from the outside of the rechargeable battery 100, and the inner part 153 may withstand the high heat and the pressure applied from the inside of the rechargeable battery 100. If the middle part 151 includes the second insulating materials or the third insulating materials, the middle part 151 may withstand the high heat and the pressure applied from the outside and the inside of the rechargeable battery 100 while firmly maintaining the seal of the terminal hole 131.

Because the insulator 150 has high resistance to heat and pressure, it may minimize (or at least reduce) a thermal deformation in various high temperature and high-pressure environments. Therefore, the rechargeable battery 100 of the present embodiment may maintain the insulating performance of the insulator 150 in various high temperature and high pressure environments, thereby increasing the safety of the battery module system and reducing the risk of ignition and explosion.

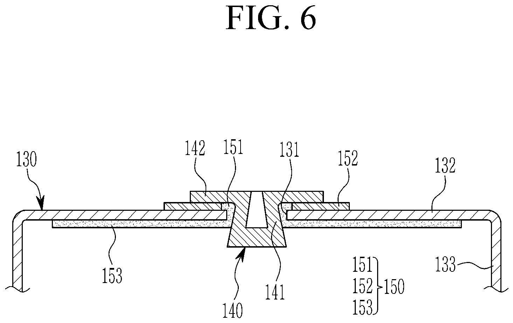

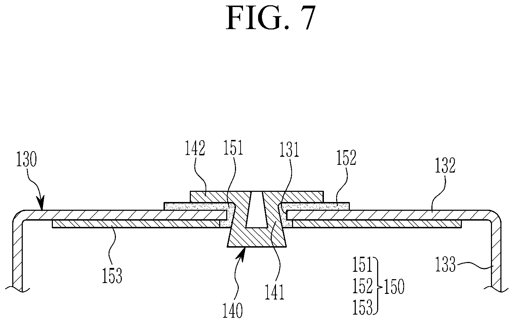

FIG. 6 and FIG. 7 are enlarged cross-sectional views of a portion of a rechargeable battery according to further embodiments. The rechargeable battery of these further embodiments has the same or similar configuration as the first embodiment described above, except for as described below.

Referring to FIG. 6 and FIG. 7, in the rechargeable battery of these further embodiments, one of the inner part 153 or the outer part 152 of the insulator 150 may include the same insulating materials as the middle part 151, and the other of the inner part 153 or the outer part 152 may include different insulating materials from the middle part 151.

In one or more embodiments, the middle part 151 and the inner part 153 may include the first insulating materials, and the outer part 152 may include the second insulating materials or the third insulating materials. In one or more embodiments, the outer part 152 may include the first insulating materials, and the middle part 151 and the inner part 153 may include the second insulating materials or the third insulating materials.

In one or more embodiments, the middle part 151 and the outer part 152 may include the first insulating materials, and the inner part 153 may include the second insulating materials or the third insulating materials. In one or more embodiments, the inner part 153 may include the first insulating materials, and the middle part 151 and outer part 152 may include the second insulating materials or the third insulating materials. The first to third insulating materials are the same as those described above with respect to the first embodiment.

When the causes of the thermal deformation applied to the insulator 150 are mainly inside the rechargeable battery, the middle part 151 and the inner part 153 may include the second insulating materials or the third insulating materials. When the causes of the thermal deformation applied to the insulator 150 are mainly outside the rechargeable battery, the middle part 151 and the outer part 152 may include the second insulating materials or the third insulating materials. The insulator 150 may be manufactured in two pieces depending on the construction material, and two pieces may be integrally combined during the assembling process of the rechargeable battery.

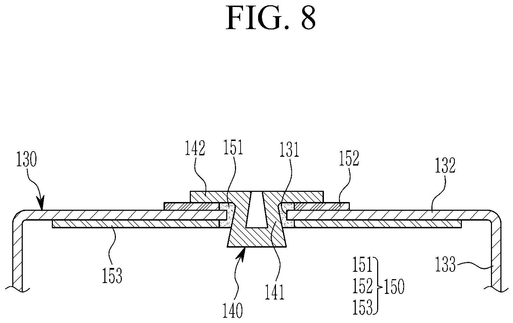

FIG. 8 is an enlarged cross-sectional view of a portion of a rechargeable battery according to a further embodiment. The rechargeable battery of this further embodiment has the same or similar configuration as the first embodiment described above, except for as described below.

Referring to FIG. 8, in the rechargeable battery of this further embodiment, the middle part 151, the outer part 152, and the inner part 153 of the insulator 150 may all include different insulating materials.

In one or more embodiments, the middle part 151 may include the first insulating materials, one of the outer part 152 or the inner part 153 may include the second insulating materials, and the other of the outer part 152 or the inner part 153 may include the third insulating materials.

In one or more embodiments, the outer part 152 may include the first insulating materials, one of the middle part 151 or the inner part 153 may include the second insulating materials, and the other of the middle part 151 or the inner part 153 may include the third insulating materials.

In one or more embodiments, the inner part 153 may include the first insulating materials, one of the middle part 151 or the outer part 152 may include the second insulating materials, and the other of the middle part 151 or the outer part 152 may include the third insulating materials. The first to third insulating materials are the same as those described with respect to the first embodiment.

When the causes of the thermal deformation applied to the insulator 150 are mainly inside the rechargeable battery, the middle part 151 and the inner part 153 may include insulating materials with a relatively higher heat resistance temperature than the outer part 152. When the causes of the thermal deformation applied to the insulator 150 are mainly external to the rechargeable battery, the middle part 151 and the outer part 152 may include insulating materials with a relatively higher heat resistance temperature than the inner part 153. The insulator 150 may be manufactured in three pieces, and three pieces may be integrally combined during the assembling process of the rechargeable battery.

While this disclosure has been described in connection with various embodiments, it is to be understood that the disclosure is not limited to the disclosed embodiments, but, on the contrary, is intended to cover various modifications and equivalent arrangements included within the scope of the appended claims.

Embodiments are set out in the following clauses:
Clause 1. A rechargeable battery comprising:
   an electrode assembly including a first electrode, a separator, and a second electrode;
   a can that accommodates the electrode assembly inside and where a terminal hole is positioned;
   a rivet terminal including a pillar part penetrating the terminal hole and a head part connected to the pillar part; and
   an insulator positioned between the rivet terminal and the can,
   wherein the insulator includes a middle part that surrounds the pillar part and is inserted into the terminal hole, an outer part that is in contact with the head part and the outer surface of the can, and an inner part that is in contact with the inner surface of the can, and
   at least two of the middle part, the outer part, and the inner part include different insulating materials with different heat resistance temperatures.
Clause 2. The rechargeable battery of clause 1, wherein
   the outer part and the inner part include insulating materials having heat resistance temperature different from heat resistance temperature of the middle part.
Clause 3. The rechargeable battery of clause 2, wherein
   the middle part includes thermoplastic polymer materials, and
   the outer part and the inner part include any one of crosslinked polymer materials, thermosetting polymer materials, polymer materials containing non-conductors, anodized aluminum, and ceramics.
Clause 4. The rechargeable battery of clause 2, wherein
   the middle part includes any one of crosslinked polymer materials, thermosetting polymer materials, polymer materials containing non-conductors, anodized aluminum, and ceramics, and
   the outer part and the inner part include thermoplastic polymer materials.
Clause 5. The rechargeable battery of clause 1, wherein
   one of the outer part and the inner part includes the same insulating material as the middle part, and the other includes a different insulating material from the middle part.
Clause 6. The rechargeable battery of clause 5, wherein
   the middle part and the inner part include thermoplastic polymer materials, and
   the outer part includes any one of crosslinked polymer materials, thermosetting polymer materials, polymer materials containing non-conductors, anodized aluminum, and ceramics.
Clause 7. The rechargeable battery of clause 5, wherein:
   the middle part and the inner part include any one of crosslinked polymer materials, thermosetting polymer materials, polymer materials containing non-conductors, anodized aluminum, and ceramics, and
   the outer part includes thermoplastic polymer materials.
Clause 8. The rechargeable battery of clause 5, wherein
   the middle part and the outer part include thermoplastic polymer materials, and
   the inner part includes any one of crosslinked polymer materials, thermosetting polymer materials, polymer materials containing non-conductors, anodized aluminum, and ceramics.
Clause 9. The rechargeable battery of clause 5, wherein
   the middle part and the outer part include any one of crosslinked polymer materials, thermosetting polymer materials, polymer materials containing non-conductors, anodized aluminum, and ceramics, and
   the inner part includes thermoplastic polymer materials.
Clause 10. The rechargeable battery of clause 1, wherein
   the middle part, the outer part, and the inner part include different insulating materials.
Clause 11. The rechargeable battery of clause 10, wherein
   the middle part includes thermoplastic polymer materials,
   one of the outer part and the inner part includes any one of crosslinked polymer materials, thermosetting polymer materials, and polymer materials containing non-conductors, and the other includes any one of anodized aluminum and ceramics.
Clause 12. The rechargeable battery of clause 10, wherein the outer part includes thermoplastic polymer materials,
   one of the middle part and the inner part includes any one of crosslinked polymer materials, thermosetting polymer materials, and polymer materials containing non-conductors, and the other includes any one of anodized aluminum and ceramics.
Clause 13. The rechargeable battery of clause 10, wherein
   the inner part includes thermoplastic polymer materials,
   one of the middle part and the outer part includes any one of crosslinked polymer materials, thermosetting polymer materials, and polymer materials containing non-conductors, and the other includes any one of anodized aluminum and ceramics.
Clause 14. A rechargeable battery comprising:
   an electrode assembly including a first electrode, a separator, and a second electrode;
   a can that accommodates the electrode assembly inside and where a terminal hole is positioned;
   a rivet terminal including a pillar part penetrating the terminal hole and a head part connected to the pillar part; and
   an insulator positioned between the rivet terminal and the can,
   wherein the insulator includes a middle part that surrounds the pillar part and is inserted into the terminal hole, an outer part that is in contact with the head part and the outer surface of the can, and an inner part that is in contact with the inner surface of the can, and
   the middle part, the outer part, and the inner part include different insulating materials with different heat resistance temperatures, and the outer part, the middle part, and the inner part have higher heat resistance temperatures in that order.
Clause 15. The rechargeable battery of clause 14, wherein
   the inner part includes thermoplastic polymer materials, and
   at least one of the middle part and the outer part includes any one of crosslinked polymer materials, thermosetting polymer materials, polymer materials containing non-conductors, anodized aluminum, and ceramics.
Clause 16. A rechargeable battery comprising:
   an electrode assembly including a first electrode, a separator, and a second electrode;
   a can that accommodates the electrode assembly inside and where a terminal hole is positioned;
   a rivet terminal including a pillar part penetrating the terminal hole and a head part connected to the pillar part; and
   an insulator positioned between the rivet terminal and the can,
   wherein the insulator includes a middle part that surrounds the pillar part and is inserted into the terminal hole, an outer part that is in contact with the head part and the outer surface of the can, and an inner part that is in contact with the inner surface of the can, and
   the middle part, the outer part, and the inner part include different insulating materials with different heat resistance temperatures, and the inner part, the middle part, and the outer part have higher heat resistance temperatures in that order.
Clause 17. The rechargeable battery of clause 16, wherein
   the outer part includes thermoplastic polymer materials, and
   at least one of the middle part and the inner part include any one of crosslinked polymer materials, thermosetting polymer materials, polymer materials containing non-conductors, anodized aluminum, and ceramics.

## Claims

1. A rechargeable battery comprising:
an electrode assembly comprising a first electrode, a separator, and a second electrode;
a can accommodating the electrode assembly, the can comprising a terminal hole;
a rivet terminal comprising a pillar part extending through the terminal hole and a head part coupled to the pillar part; and
an insulator between the rivet terminal and the can,
wherein the insulator comprises a middle part surrounding the pillar part and extending into the terminal hole, an outer part contacting the head part and an outer surface of the can, and an inner part contacting an inner surface of the can, and
at least two of the middle part, the outer part, and the inner part comprise different insulating materials with different heat resistance temperatures.

2. The rechargeable battery of claim 1, wherein
the outer part and the inner part comprise insulating materials having a heat resistance temperature different than a heat resistance temperature of the middle part.

3. The rechargeable battery of claim 2, wherein
the middle part comprises thermoplastic polymer materials, and
the outer part and the inner part comprise one or more materials selected from the group consisting of crosslinked polymer materials, thermosetting polymer materials, polymer materials containing non-conductors, anodized aluminum, and ceramics.

4. The rechargeable battery of claim 2, wherein
the middle part comprises one or more materials selected from the group consisting of crosslinked polymer materials, thermosetting polymer materials, polymer materials containing non-conductors, anodized aluminum, and ceramics, and
the outer part and the inner part comprise thermoplastic polymer materials.

5. The rechargeable battery of claim 1, wherein
one of the outer part or the inner part comprises a same insulating material as the middle part, and another of the outer part or the inner part comprises a different insulating material than the middle part.

6. The rechargeable battery of claim 5, wherein
the middle part and the inner part comprise thermoplastic polymer materials, and
the outer part comprises one or more materials selected from the group consisting of crosslinked polymer materials, thermosetting polymer materials, polymer materials containing non-conductors, anodized aluminum, and ceramics.

7. The rechargeable battery of claim 5, wherein:
the middle part and the inner part comprise one or more materials selected from the group consisting of crosslinked polymer materials, thermosetting polymer materials, polymer materials containing non-conductors, anodized aluminum, and ceramics, and
the outer part comprises thermoplastic polymer materials.

8. The rechargeable battery of claim 5, wherein
the middle part and the outer part each comprise thermoplastic polymer materials, and
the inner part comprises one or more materials selected from the group consisting of crosslinked polymer materials, thermosetting polymer materials, polymer materials containing non-conductors, anodized aluminum, and ceramics.

9. The rechargeable battery of claim 5, wherein
the middle part and the outer part each comprise one or more materials selected from the group consisting of crosslinked polymer materials, thermosetting polymer materials, polymer materials containing non-conductors, anodized aluminum, and ceramics, and
the inner part comprises thermoplastic polymer materials.

10. The rechargeable battery of claim 1, wherein
the middle part, the outer part, and the inner part comprise different insulating materials.

11. The rechargeable battery of claim 10, wherein
the middle part comprises thermoplastic polymer materials,
one of the outer part or the inner part comprises one or more materials selected from the group consisting of crosslinked polymer materials, thermosetting polymer materials, and polymer materials containing non-conductors, and
another of the outer part or the inner part comprises any one of anodized aluminum or ceramics.

12. The rechargeable battery of claim 10, wherein
the outer part comprises thermoplastic polymer materials,
one of the middle part or the inner part comprises one or more materials selected from the group consisting of crosslinked polymer materials, thermosetting polymer materials, and polymer materials containing non-conductors, and
another of the middle part or the inner part comprises any one of anodized aluminum or ceramics.

13. The rechargeable battery of claim 10, wherein
the inner part comprises thermoplastic polymer materials,
one of the middle part or the outer part comprises one or more materials selected from the group consisting of crosslinked polymer materials, thermosetting polymer materials, and polymer materials containing non-conductors, and
another of the middle part or the outer part comprise any one of anodized aluminum and ceramics.

14. The rechargeable battery according to any one of claims 10 to 13, wherein the different insulating materials have different heat resistance temperatures, and
wherein the inner part has a higher heat resistance temperature than the middle part and the middle part has a higher heat resistance temperature than the outer part, and optionally wherein
the outer part comprises thermoplastic polymer materials, and
at least one of the middle part or the inner part comprises one or more materials selected from the group consisting of crosslinked polymer materials, thermosetting polymer materials, polymer materials containing non-conductors, anodized aluminum, and ceramics.

15. The rechargeable battery according to any one of claims 10 to 13, wherein the different insulating materials have different heat resistance temperatures, and wherein the outer part has a higher heat resistance temperature than the middle part and the middle part has a higher heat resistance temperature than the inner part, and optionally wherein
the inner part comprises thermoplastic polymer materials, and
at least one of the middle part or the outer part comprises one or more materials selected from the group consisting of crosslinked polymer materials, thermosetting polymer materials, polymer materials containing non-conductors, anodized aluminum, and ceramics.
